# EUROPEAN PATENT APPLICATION

(11) **EP 2 521 065 A2**
(43) Date of publication of application: **07.11.2012**
(21) Application number: 12166528.5
(22) Date of filing: 03.05.2012
(51) Int. Cl.: G06F 21/20, G06F 21/24

(54) **Memory device and method for accessing the same**

(30) Priority: 04.05.2011 TW 100115596; 17.02.2012 TW 101105275
(71) Applicant: Yang, Chien-Kang, Taipei City 10682 (TW)
(72) Inventor: Yang, Chien-Kang, Taipei City 10682 (TW)
(74) Representative: Robson, Aidan John

(57) **Abstract**

A method is provided for accessing a memory device (100) that stores a master key and at least one encrypted data file and that includes a data-key storage portion (22) being encrypted using the master key and having at least one data key. In the method, a control unit (2) is configured to receive a personal identification number (PIN), to determine whether the received PIN is authentic, to obtain the master key from the memory device (100) upon determining that the PIN is authentic, to decrypt the encrypted data-key storage portion (22) using the master key to obtain the at least one data key, and to decrypt the at least one encrypted data file using the data key to obtain a data file.

## Description

The invention relates to a method for accessing a memory device, more particularly to a method for accessing a memory card in a mobile device.

Since a conventional memory card has advantages such as large storage capacity, small volume and portability, it is usually used in a portable device (e.g., a mobile phone). Nonetheless, when the conventional memory card is lost, there is no protection for the data stored therein from unauthorized access.

Therefore, there is provided a smart card with an embedded integrated circuit (IC) chip that is capable of encrypting the data stored therein so as to protect the data from unauthorized access. However, the IC chip will decrypt the encrypted data stored in the smart card and allow access to the data once the IC chip determines that a user input password conforms with a preset password, which is stored in the smart card and may be obtained by scanning the smart card. In addition, when it is desired to change the preset password stored in the smart card to a new password, the encrypted data stored in the smart card needs to be decrypted, and then the data is encrypted using the new password. This procedure spends relatively more time for decryption and encryption.

Therefore, the object of the present invention is to provide a method for accessing a memory device, and for providing better protection to data stored therein.

Accordingly, a method of the present invention is for accessing a memory device that stores a master key and at least one encrypted data file and that includes a data-key storage portion being encrypted using the master key and having at least one data key. Said at least one data key is associated with and unique to said at least one encrypted data file. The method is to be implemented by a control unit operatively associated with an electronic device that is coupled to the memory device. The method comprises the following steps of:
A) configuring the control unit to receive a personal identification number (PIN);
B) configuring the control unit to determine whether the PIN received in step A) is authentic;
C) configuring the control unit to obtain the master key from the memory device when it is determined in step B) that the PIN is authentic;
D) configuring the control unit to decrypt the data-key storage portion using the master key to obtain said at least one data key; and
E) configuring the control unit to decrypt said at least one encrypted data file using the data key obtained in step D) so as to obtain a data file from said at least one encrypted data file, and to allow the electronic device to access the data file.

Preferably, the control unit includes a user interface, an application program interface, a defragmentation program and an identification program. The memory device further stores a predefined value. Step B) includes the following sub-steps of:
B1) configuring the control unit to transmit the PIN from the user interface to the application program interface;
B2) configuring the control unit to make the PIN into fragments and to scramble the fragments via the application program interface;
B3) configuring the control unit to defragment the scrambled fragments to obtain a defragmented value corresponding to the PIN and to generate a hash value based on the defragmented value via the defragmentation program; and
B4) configuring the control unit to determine, via the identification program, whether the hash value conforms with the predefined value stored in the memory device, and to verify the PIN is authentic when it is determined that the hash value conforms with the predefined value.

According to another aspect, a method of this invention is used for generating a master key to be used to encrypt at least one data file stored in a memory device. The method is to be implemented by a control unit operatively associated with the memory device. The memory device includes a hidden data storage area. The control unit includes a user interface, an application program interface, a defragmentation program, an identification program and a master-key generating program. The method comprises the following steps of:
I) configuring the control unit to receive a personal identification number (PIN) via the user interface;
II) configuring the control unit to transmit the PIN from the user interface to the application program interface;
III) configuring the control unit to make the PIN into fragments and to scramble the fragments via the application programming interface;
IV) configuring the control unit to defragment the scrambled fragments to obtain a defragmented value corresponding to the PIN, and to generate a predefined value based on the defragmented value, via the defragmentation program;
V) configuring the control unit to generate the master key that is associated with the predefined value, via the master-key generating program; and
VI) configuring the control unit to store the master key in the hidden data storage area of the memory device.

Still another object of this invention is to provide a method for encrypting at least one data file stored in a memory device that includes a data-key storage portion and a system storage portion. The method is to be implemented using a control unit and comprises the following steps of:
a) configuring the control unit to generate a data key that is associated with and unique to said at least one data file stored in the memory device, and to encrypt said at least one data file using the data key to obtain an encrypted data file;
b) configuring the control unit to store the data key to the data-key storage portion;
c) configuring the control unit to generate a master key, and to encrypt the data-key storage portion using the master key; and
d) configuring the control unit to store the master key to the system storage portion.

Still another object of this invention is to provide a memory device comprising a storage module and a control unit.

The storage module includes a storage module including a system storage portion that stores a master key, a data storage portion that stores at least one encrypted data file, and a data-key storage portion that stores at least one data key associated with and unique to the at least one encrypted data file and that is encrypted using the master key.

The control unit is coupled to the storage module and is configured to receive a personal identification number (PIN), to determine whether the PIN is authentic, to obtain the master key from the system storage portion when it is determined that the PIN is authentic, to decrypt the data-key storage portion using the master key to obtain the at least one data key, and to decrypt the at least one encrypted data file using the data key thus obtained so as to obtain a data file from the at least one encrypted data file.

Still another object of this invention is to provide a method for changing a current master key stored in a memory device to a new master key. The method is implemented by a control 1 unit operatively associated with the memory device. The memory device includes a system storage portion for storing the current master key and a data-key storage portion encrypted using the current master key. The method comprises the following steps of:
configuring the control unit to receive a current personal identification number (PIN);
configuring the control unit to determine whether the current PIN thus received is authentic;
configuring the control unit to obtain the current master key from the system storage portion of the memory device when the determination is affirmative;
configuring the control unit to receive a new PIN;
configuring the control unit to generate the new master key based on the new PIN;
configuring the control unit to decrypt the data-key storage portion using the current master key;
configuring the control unit to encrypt the data-key storage portion using the new master key; and
configuring the control unit to store the new master key in the system storage portion.

Other features and advantages of the present invention will become apparent in the following detailed description of the preferred embodiment with reference to the accompanying drawings, of which:
Figure 1 is a schematic block diagram illustrating a preferred embodiment of a memory card according to this invention;
Figure 2 is a block diagram illustrating a control unit of the memory card;
Figure 3 is a flowchart illustrating an encryption procedure for encrypting data files stored in the memory card;
Figure 4 is a flowchart of a decryption procedure of a preferred embodiment of a method for accessing the memory card according to this invention;
Figure 5 is a flowchart illustrating a procedure for determining whether a received personal identification number is authentic;
Figure 6 is a flowchart illustrating a master-key generating procedure for generating a master key to be used to encrypt at least one data file stored in the memory device;
Figure 7 is a flowchart illustrating a master-key change procedure for changing a current master key stored in the memory device to a new master key; and
Figures 8(a) and 8(b) illustrate address associations between data files stored in a data storage portion and data keys stored in a data-key storage portion.

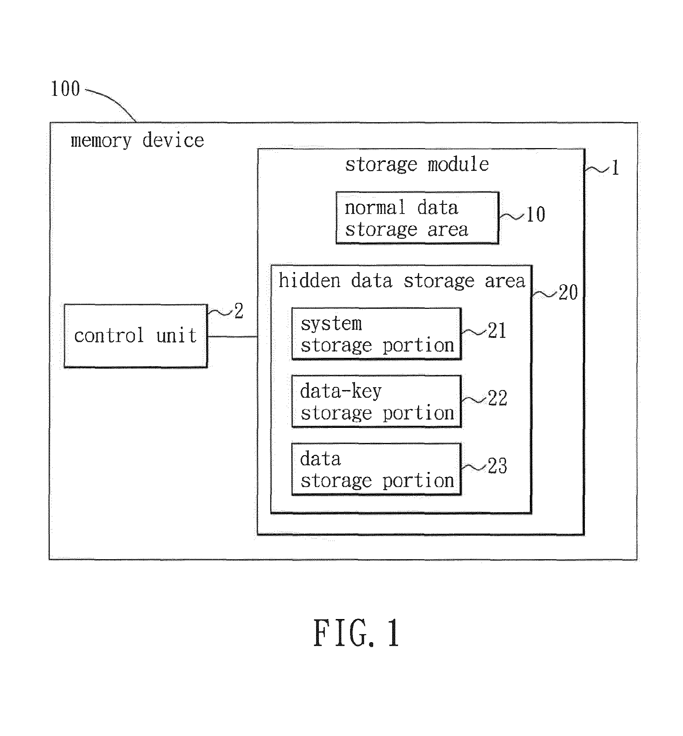

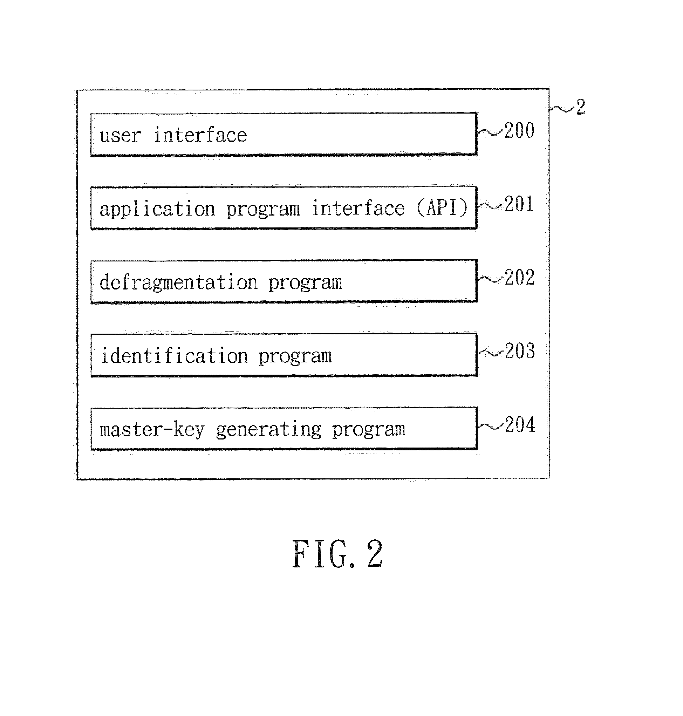

Reference is made to Figures 1 and 2, which illustrate the preferred embodiment of a memory device 100 according to the present invention.

In this embodiment, the memory device 100 is a smart card 100 including a storage module 1 and a control unit 2 that is coupled to the storage module 1. The storage module 1 and the control unit 2 are integrated in a single chip. The control unit 2 is operatively associated with an electronic device (e.g., a mobile phone) that is coupled to the memory card 100 to implement a method for accessing the storage module 1.

The storage module 1 includes a normal data storage area 10 and a hidden data storage area 20. The normal data storage area 10 is for storing, for example, data that are less important to a user and that do not require protection, and the hidden data storage area 20 is for storing private information that are relatively more important to the user. The hidden data storage area 20 is configured to be only accessible to the control unit 2, and is further partitioned into a system storage portion 21, a data-key storage portion 22 and a data storage portion 23. The system storage portion 21 is configured to store a master key and a predefined value (for example, in a form of a hash value) that is related to a personal identification number (PIN). The data storage portion 23 is configured to store a plurality of data files containing important information that require protection. The data-key storage portion 22 is configured to store a plurality of data keys that are associated with and unique to the data files, respectively.

The control unit 2 includes a user interface 200, an application program interface (API) 201, a defragmentation program 202, an identification program 203 and a master-key generating program 204 The hidden data storage area 20 is configured to be detected exclusively by the application program interface 201 of the control unit 2, while the operating system of the electronic device can only detect the normal data storage area 10.

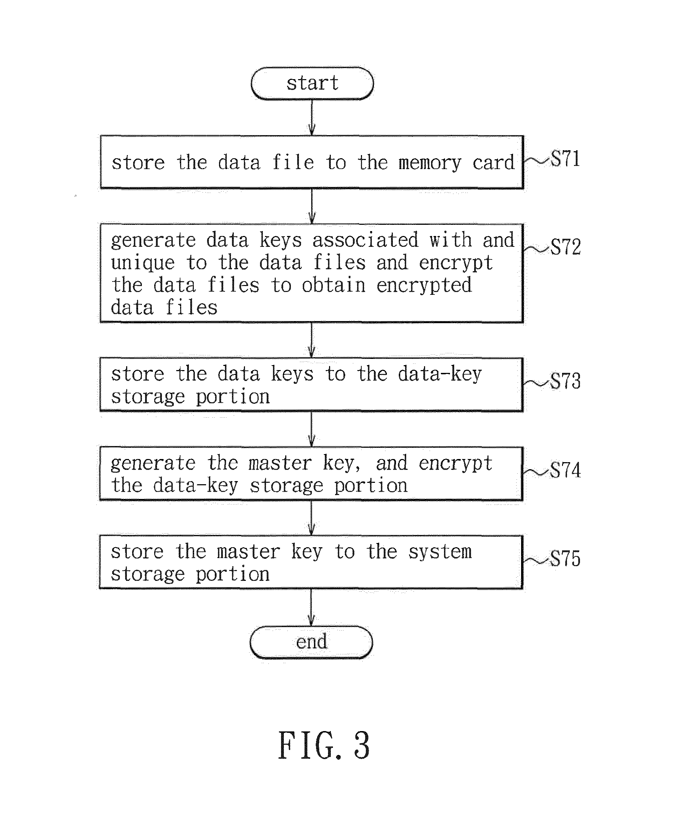

The preferred embodiment of a method for accessing the memory device 100 shall be described in details in the succeeding paragraphs with reference to Figures 3 to 5.

Figure 3 illustrates an encryption procedure for encrypting the data files stored in the hidden data storage area 20. In step S71, the control unit 2 is configured to store the data files to the data storage portion 23 of the hidden data storage area 20. In step S72, the control unit 2 is configured to randomly generate data keys associated with and unique to the data files, respectively, and to encrypt the data files using the respective data keys to obtain encrypted data files corresponding respectively to the data files. Then, the control unit 2 is configured to store the data keys to the data-key storage portion 22 in step 573, and to generate the master key, and to encrypt the data-key storage portion 22 using the master key in step S74. In step S75, the control unit 2 is configured to store the master key to the system storage portion 21. The encryption procedure has multiple encryptions for securing the data files stored in the data storage portion 23 of the hidden data storage area 20.

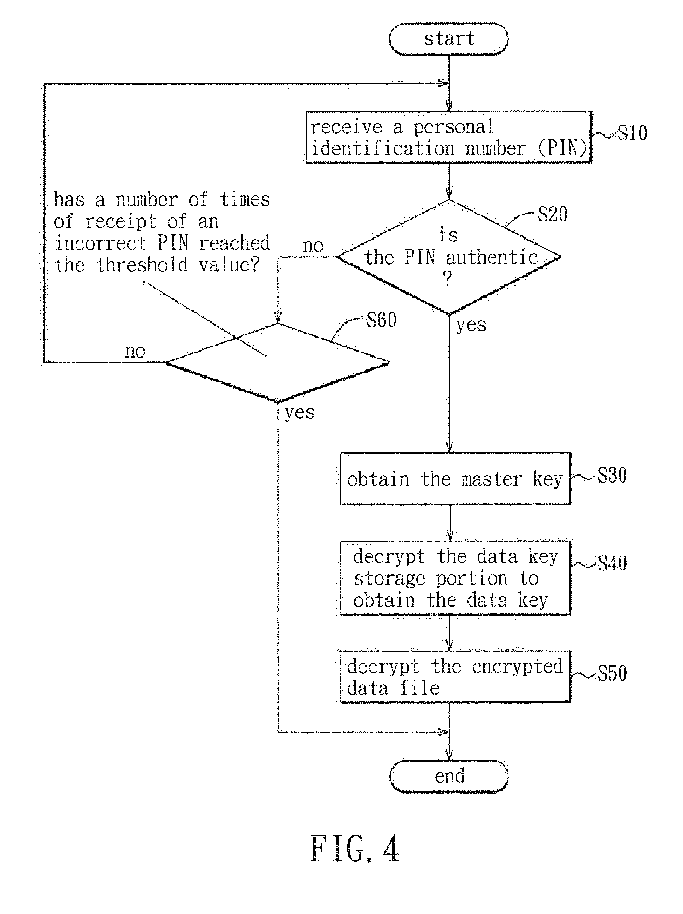

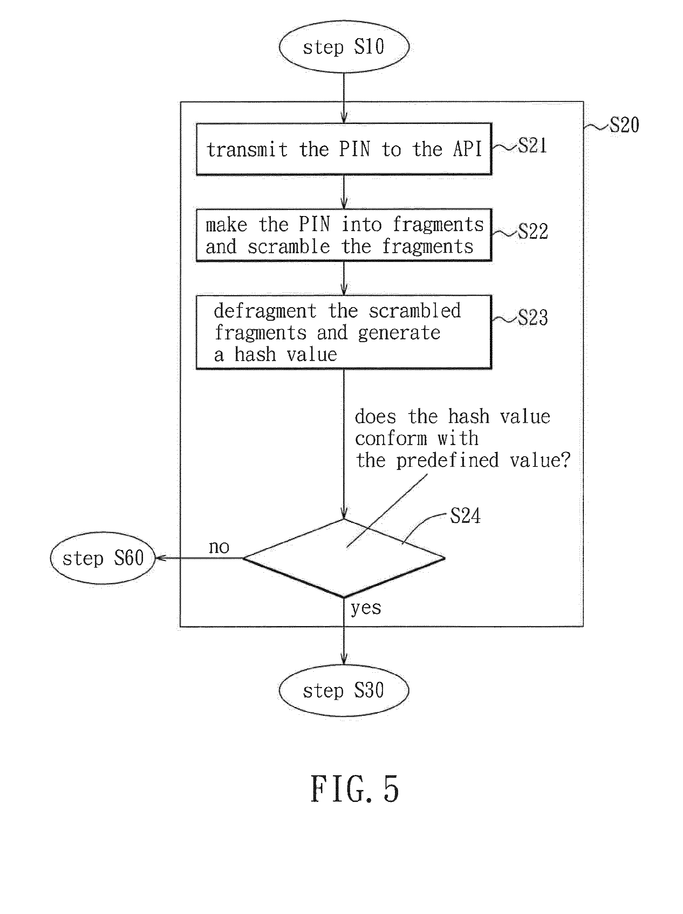

Figures 4 and 5 that illustrate a decryption procedure for decrypting the encrypted data files that are stored in the data storage portion 23 of the hidden data storage area 20 and that are encrypted using the aforementioned encryption procedure.

In step S10, the control unit 2 is configured to receive the PIN inputted by the user through the user interface 200. In this embodiment, the PIN consists of 8 to 24 characters.

In step S20, the control unit 2 is configured to determine whether the PIN received in step S10 is authentic. In particular, as shown in Figure 5, step S20 includes the following sub-steps S21 to S25 in order to prevent the PIN from being obtained by directly scanning the storage area 20.

In sub-step S21, the control unit 2 is configured to transmit the PIN, from the user interface 200, to the API 201. In sub-step S22, the control unit 2 is configured to make the PIN into fragments and to scramble the fragments from the API 201. In sub-step S23, the control unit 2 is configured to defragment the scrambled fragments to obtain a defragmented value corresponding to the PIN and to generate a hash value based on the defragmented value using the defragmentation program 202 In sub-step S24, the control unit 2 is configured to determine, using the identification program 203, whether the hash value conforms with the predefined value stored in the memory device 100, and to verify the PIN is authentic when it is determined that the hash value conforms with the predefined value.

In particular, the characters of the PIN are transmitted from the user interface 200 to the API 201 one by one, such that the API 201 is configured to fragment and scramble a current received one of the characters with other characters that have been received, fragmented and scrambled previously. By this way, the characters of the PIN are fragmented and scrambled repeatedly, and are not arranged in the original sequence of the PIN. Thus, safety of the PIN during transmission is enhanced.

The flow goes to step S30 when it is determined in sub-step S24 that the PIN received in step S10 is authentic, and goes to step S60 when otherwise.

In step S60, the control unit 2 is configured to count a number of times of receipt of an incorrect PIN, and to determine whether the number reaches a threshold value (e. g. , 10 in this embodiment). The decryption procedure ends and the memory device 100 is locked to prohibit accessing the data stored therein when the number of times of receipt of an incorrect PIN reaches the threshold value. Otherwise, the flow goes back to step 10 to allow the user to input the PIN again.

In step S30, the control unit 2 is configured to obtain the master key from the system storage portion 21 of the hidden data storage area 20 when it is determined in step S20 that the PIN is authentic.

In step S40, the control unit 2 is configured to decrypt the data-key storage portion 22 using the master key to obtain the data keys that are associated with and unique to the encrypted data files, respectively.

In step S50, the control unit 2 is configured to decrypt the encrypted data files using the data keys obtained in step S40 so as to obtain the data files from the encrypted data files, respectively, and to allow the electronic device to access the data files.

In other words, the user inputs the PIN through the electronic device, and the control unit 2 determines whether the PIN is authentic by examining the hash value based upon the PIN to thereby provide relatively better security to the memory device 100. Upon determining that the PIN is authentic, the control unit 2 first obtains the master key, which is subsequently used to decrypt the data-key storage portion 22 to obtain the data keys. Then, the encrypted data files are decrypted using the data keys to obtain the data files stored in the hidden data storage area 20. The decryption procedure is capable of reducing the possibility that the data files stored in the hidden data storage area 20 are stolen.

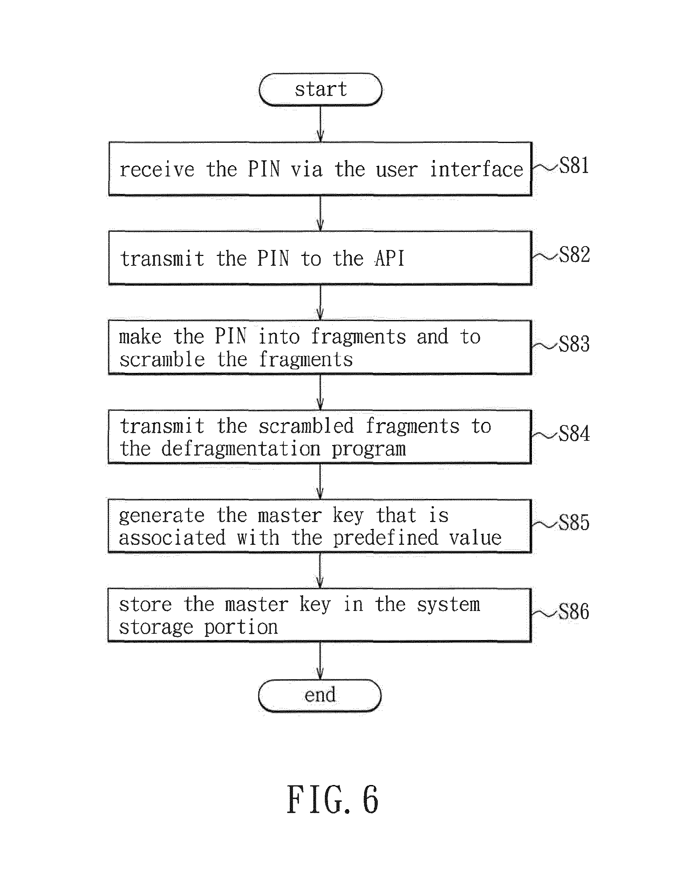

Reference is now made to Figure 6, which illustrates a master-key generating procedure for generating the master key to be used to encrypt at least one data file stored in the memory device 100 (when the user intends to use the memory device 100 and sets a PIN for the first time).

In this procedure, the control unit 2 is configured to receive the PIN via the user interface 200 in step S81, and to transmit the PIN from the user interface 200 to the API 201 in step S82.

In step 583, the control unit 2 is configured to make the PIN into fragments and to scramble the fragments using the API 201. Then, in step S84, the control unit 2 is configured to transmit the scrambled fragments to the defragmentation program 202, and to defragment the scrambled fragments to obtain a defragmented value corresponding to the PIN and to generate a predefined value (for example, a hash value) based on the defragmented value using the defragmentation program 202.

In step S85, the control unit 2 is configured to generate the master key that is associated with the predefined values using the master-key generating program 204. In this embodiment, the master-key generating program 204 of the control unit 2 is configured to generate the master key based on the predefined value. In other embodiments, the master-key generating program 204 of the control unit 2 may be configured to generate the master key randomly, and then, to associate the master key with the predefined value.

In step S86, the control unit 2 is configured to store the master key in the system storage portion 21 of hidden data storage area 20.

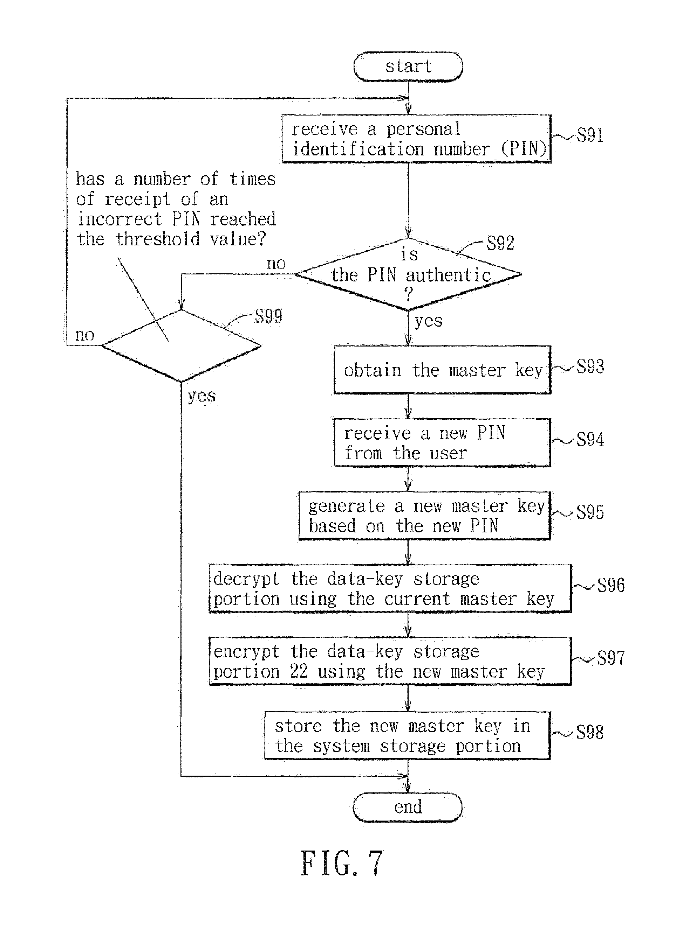

Reference is now made to Figure 7, which illustrates steps of a master-key changing procedure for changing the current master key stored in a memory device 100 to the new master key (when the user intends to change the current PIN to a new PIN).

In this procedure, the control unit 2 is configured to receive a PIN from the user interface 200 in step 91, and to determine whether the current PIN thus received is authentic (i. e. , conforming with the current PIN) in step 92.

The flow goes to step S93 when it is determined in step S92 that the PIN received in step S91 is authentic, and goes to step S99 when otherwise.

In step S99, the control unit 2 is configured to count a number of times of receipt of an incorrect PIN, and to determine whether the number reaches a threshold value (e.g., 10 in this embodiment). The master-key changing procedure ends and the memory device 100 is locked to prohibit accessing the data stored therein when the number of times of receipt of an incorrect PIN reaches the threshold value. Otherwise, the flow goes back to step 91 to allow the user to input another PIN.

On the other hand, the control unit 2 is configured to obtain the current master key from the system storage portion 21 of the memory device 100 in step 93, and to allow the user interface 200 to receive a new PIN from the user in step 594.

Afterward, the control unit 2 is configured to generate a new master key based on the new PIN in step S95. Similar to the above master-key generating procedure described in connection with Figure 6, the master-key generating program 204 of the control unit 2 is configured to generate the new master key based on the new PIN, or to generate the new master key randomly and to associate the new master key with the new PIN.

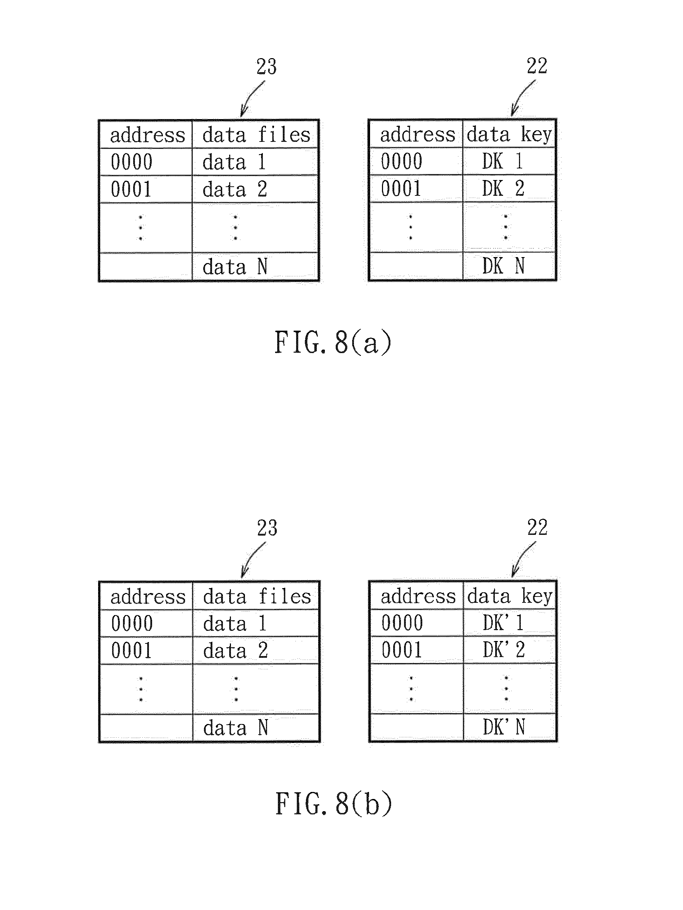

In step 596, the control unit 2 is configured to decrypt the data-key storage portion 22 using the current master key. As shown in Figure 8(a), the data storage portion 23 stores a plurality of data files (data 1, data 2,..., data N) at respective memory addresses (0000, 0001,..., etc.), and the data key storage portion 22 stores a plurality of data keys (DK1, DK2,.,., DKN) at respective memory addresses (0000, 0001,..., etc.) associated with the memory addresses of the data files in the data storage portion 23, respectively. Namely, the data keys (DK1, DK2,..., DKN) are used to decrypt the data files (data 1, data 2,..., data N), respectively.

In step S97, the control unit 2 is configured to encrypt the data-key storage portion 22 using the new master key. As shown in Figure 8(b), as a result of the change of the master key, the data keys stored in the data-key storage portion 22 (DK1, DK2,..., DKN) are changed to a plurality of new data keys (DK'1, DK'2,..., DK'N) without changing the memory addresses of the new data keys. As such, previously established address association between addresses of the data files and the data keys are also unchanged, and each of the new data keys (DK'1, DK'2,..., DK'N) is used to encrypt the corresponding data file(data 1, data 2,..., data N).

In step S98, the control unit 2 is configured to store the new master key in the system storage portion 21.

It is worth noting that, the methods disclosed in this invention can be implemented in a computer program product comprising a machine readable storage medium that has program instructions stored therein. When executed, the program instructions cause the control unit 2 to perform the method for accessing the memory device 100. While this invention is exemplified using a smart card as the memory device 100, a secure digital (SD) card may be employed in other embodiments of this invention. The SD card may merely comprise the storage module 1, and the control unit 2 is disposed in the electronic device.

To sum up, the method for accessing the memory device 100 of this invention involves determining whether the PIN is authentic by examining the hash value that is based upon the PIN, and not by directly examining the PIN. Thus, the possibility of extraction of the PIN from the memory device 100 is reduced. Additionally, the PIN is made into fragments and scrambled before transmitting, and therefore the PIN is secured during transmission and can not be extracted by scanning the memory device 100. Moreover, each of the data files stored in the data storage portion 23 is associated with a unique data key that is randomly generated, such that each of the data files can be managed and assigned with different security levels individually. The data-key storage portion 22, in which the data keys are stared, is also decrypted using the master key. This invention thus has multiple encryptions for securing the data files, and provides relatively better security to the data files.

## Claims

1. A method for accessing a memory device (100) that stores a master key and at least one encrypted data file and that includes a data-key storage portion (22) being encrypted using the master key and having at least one data key, said at least one data key being associated with and unique to said at least one encrypted data file, said method to be implemented by a control unit (2) operatively associated with an electronic device that is coupled to the memory device (100), said method being **characterized by** the following steps of:
A) configuring the control unit (2) to receive a personal identification number (PIN);
B) configuring the control unit (2) to determine whether the PIN received in step A) is authentic;
C) configuring the control unit (2) to obtain the master key from the memory device (100) when it is determined in step B) that the PIN is authentic;
D) configuring the control unit (2) to decrypt the data-key storage portion (22) using the master key to obtain said at least one data key; and
E) configuring the control unit (2) to decrypt said at least one encrypted data file using the data key obtained in step D) so as to obtain a data file from said at least one encrypted data file, and to allow the electronic device to access the data file.

2. The method as claimed in claim 1, **characterized in that**, in step A), the control unit (2) is configured to receive the PIN through a user interface (200) thereof.

3. The method as claimed in any one of claims 1 and 2, the control unit (2) including a user interface (200), an application program interface (201), a defragmentation program (202) and an identification program (203), the memory device (100) further storing a predefined value, **characterized in that** step B) includes the following sub-steps of:
B1) configuring the control unit (2) to transmit the PIN from the user interface (200) to the application program interface (201);
B2) configuring the control unit (2) to make the PIN into fragments and to scramble the fragments via the application program interface (201);
B3) configuring the control unit (2) to defragment the scrambled fragments to obtain a defragmented value corresponding to the PIN and to generate a hash value based on the defragmented value via the defragmentation program (202); and
B4) configuring the control unit (2) to determine, via the identification program (203), whether the hash value conforms with the predefined value stored in the memory device (100), and to verify the PIN is authentic when it is determined that the hash value conforms with the predefined value.

4. The method as claimed in any one of claims 1 to 3, the memory device (100) further including a system storage portion (21) that stores the master key,
**characterized in that**, in step A), the control unit (2) is configured to obtain the master key from the system storage portion (21).

5. The method as claimed in any one of claims 1 to 4, the memory device (100) further including a system storage portion (21) storing the master key, said method being further **characterized by** the following steps, after step A), of:
i) configuring the control unit (2) to store the data file to the memory device (100);
ii) configuring the control unit (2) to generate said at least one data key that is associated with and unique to the data file, and to encrypt the data file using said at least one data key to obtain said at least one encrypted data file;
iii) configuring the control unit (2) to store said at least one data key to the data-key storage portion (22);
iv) configuring the control unit (2) to generate the master key, and to encrypt the data-key storage portion (22) using the master key; and
v) configuring the control unit (2) to store the master key to the system storage portion (21).

6. The method as claimed in claim 5, **characterized in that**, in step ii), the control unit (2) is configured to randomly generate said at least one data key.

7. A computer program product **characterized by** a machine readable storage medium having program instructions stored therein which when executed cause a control unit (2) to perform a method for accessing a memory device (100) according to any one of claims 1 to 6.

8. A method for encrypting at least one data file stored in a memory device (100) that includes a data-key storage portion (22) and a system storage portion (21), said method to be implemented using a control unit (2) and **characterized by** the steps of:
a) configuring the control unit (2) to generate a data key that is associated with and unique to said at least one data file stored in the memory device (100), and to encrypt said at least one data file using the data key to obtain an encrypted data file;
b) configuring the control unit (2) to store the data key to the data-key storage portion (22);
c) configuring the control unit (2) to generate a master key, and to encrypt the data-key storage portion (22) using the master key; and
d) configuring the control unit (2) to store the master key to the system storage portion (21).

9. The method as claimed in claim 8, **characterized in that**, in step a), the control unit (2) is configured to randomly generate the data key.

10. A memory device (100) **characterized by**:
a storage module (1) including a system storage portion (21) that stores a master key, a data storage portion (23) that stores at least one encrypted data file, and a data-key storage portion (22) that stores at least one data key associated with and unique to said at least one encrypted data file and that is encrypted using the master key; and
a control unit (2) coupled to said storage module (1) and configured to receive a personal identification number (PIN), to determine whether the PIN is authentic, to obtain the master key from the system storage portion (21) when it is determined that the PIN is authentic, to decrypt the data-key storage portion (22) using the master key to obtain said at least one data key, and to decrypt said at least one encrypted data file using the data key thus obtained so as to obtain a data file from said at least one encrypted data file.

11. The memory device (100) as claimed in claim 10, **characterized in that**:
said system storage portion (21) of said storage module (1) further stores a predefined value; and
said control unit (2) includes
a user interface (200) for receiving the PIN, an application program interface (201) configured to make the PIN into fragments, and to scramble the fragments,
a defragmentation program (202) configured to defragment the scrambled fragments to obtain a defragmented value corresponding to the PIN, and to generate a hash value and
an identification program (203) configured to determine whether the defragmented value conforms with the predefined value stored in the system storage portion (21) and to verify the PIN is authentic when the hash value conforms with the predefined value.

12. The memory device (100) as claimed in claim 11, **characterized in that** the predefined value is stored in said system storage portion (21).

13. The memory device (100) as claimed in any one of claims 10 to 12, **characterized in that** said storage module (1) further includes a hidden data storage area (20) that includes said system storage portion (21), said data-key storage portion (22) and said data storage portion (23), and that is configured to be accessed only by said control unit (2).

14. A method for generating a master key to be used to encrypt at least one data file stored in a memory device (100), said method to be implemented by a control unit (2) operatively associated with the memory device (100), the memory device (100) including a hidden data storage area (20), the control unit (2) including a user interface (200), an application program interface (201) a defragmentation program (202), an identification program (203) and a master-key generating program (204), said method being **characterized by** the following steps of:
I) configuring the control unit (2) to receive a personal identification number (PIN) via the user interface (200);
II) configuring the control unit (2) to transmit the PIN from the user interface (200) to the application program interface (201);
III) configuring the control unit (2) to make the PIN into fragments and to scramble the fragments via the application programming interface;
IV) configuring the control unit (2) to defragment the scrambled fragments to obtain a defragmented value corresponding to the PIN, and to generate a predefined value based on the defragmented value, via the defragmentatzon program (202);
V) configuring the control unit (2) to generate the master key that is associated with the predefined value, via the master-key generating program (204); and
VI) configuring the control unit (2) to store the master key in the hidden data storage area (20) of the memory device (100).

15. The method as claimed in claim 14, **characterized in that** in step V), the master-key generating program (204) of the control unit (2) is configured to generate the master key based on the predefined value.

16. The method as claimed in any one of claims 14 to 15, **characterized in that** in step V), the master-key generating program (204) of the control unit (2) is configured to generate the master key randomly, and to associate the master key with the predefined value.

17. A method for changing a current master key stored in a memory device (100) to a new master key, said method being implemented by a control unit (2) operatively associated with the memory device (100), the memory device (100) including a system storage portion (21) for storing the current master key and a data-key storage portion (22) encrypted using the current master key, said method being **characterized by** the following steps of:
configuring the control unit (2) to receive a current personal identification number (PIN);
configuring the control unit (2) to determine whether the current PIN thus received is authentic;
configuring the control unit (2) to obtain the current master key from the system storage portion (21) of the memory device (100) when the determination is affirmative;
configuring the control unit (2) to receive a new PIN;
configuring the control unit (2) to generate the new master key based on the new PIN;
configuring the control unit (2) to decrypt the data-key storage portion (22) using the current master key;
configuring the control unit (2) to encrypt the data-key storage portion (22) using the new master key; and
configuring the control unit (2) to store the new master key in the system storage portion (21).
